# EUROPEAN PATENT APPLICATION

(11) **EP 4 668 619 A1**
(43) Date of publication of application: **24.12.2025**
(21) Application number: 24755838.0
(22) Date of filing: 08.01.2024
(51) Int. Cl.: H04B 17/391

(54) **MODEL MONITORING METHOD AND APPARATUS, TERMINAL, AND NETWORK SIDE DEVICE**

(30) Priority: 17.02.2023 CN 202310131534
(71) Applicant: Datang Mobile Communications Equipment Co., Ltd., Beijing 100085 (CN)
(72) Inventor: WANG, Da, Beijing 100085 (CN); GAO, Qiubin, Beijing 100085 (CN); FEI, Yongqiang, Beijing 100085 (CN); HUANG, Qiuping, Beijing 100085 (CN); SU, Yuwan, Beijing 100085 (CN)
(74) Representative: dompatent
(86) International application number: PCT/CN2024/071043
(87) International publication number: WO 2024/169462

(57) **Abstract**

The present disclosure provides a model monitoring method, apparatus, terminal, and network side device. The method includes: measuring, by a terminal, a reference signal sent by a network side device on beams in a first set; and monitoring a model according to an associated beam set or an angle direction set of N best beams in the first set; wherein N is an integer greater than or equal to 1.

## Description

### CROSS-REFERENCE TO RELATED APPLICATION

The present disclosure claims priority to Chinese Patent Application No. 202310131534.7, filed with the China National Intellectual Property Administration on February 17, 2023, and entitled "Model Monitoring Method, Apparatus, Terminal, and Network-Side Device", the entire contents of which are incorporated herein by reference.

### TECHNICAL FIELD

The present disclosure relates to the field of communication technologies, and in particular, to a model monitoring method, apparatus, terminal, and network-side device.

### BACKGROUND

In a downlink beam management scenario, a base station needs to cyclically transmit transmission beams (Tx beams) in different directions. A terminal uses a reception beam (Rx beam) to receive the Tx beams and measures the Channel State Information Reference Signal (CSI-RS) or Synchronization Signal Block (SSB) transmitted on all Tx beams. The terminal selects the beam with the best reception performance for subsequent use by the base station to transmit information to the terminal using this downlink beam.

Since CSI-RS or SSB needs to be transmitted on all Tx beams, resource consumption is significant. Simultaneously, the terminal needs to use all Rx beams to measure the CSI-RS or SSB transmitted on all Tx beams respectively. Therefore, terminal implementation is relatively complex, and measurement overhead is significant. To solve the above problems, current technology proposes using Artificial Intelligence (AI) or Machine Learning (ML) technology. AI/ML-based beam management primarily predicts the optimal downlink beam between the base station and the terminal, for example, predicting the optimal beam of the overall beam set (called beams of set A (SetA)) based on measurements of downlink beams in a beam subset (called beams of set B), thereby saving reference signal transmission resources, terminal measurement overhead, and terminal measurement latency.

AI algorithms or ML algorithms are obtained based on data training. Wireless communication systems are complex and variable, and it cannot be guaranteed that Al/ML-based beam management will always have good performance. If the AI/ML-based beam management algorithm is not suitable for current channel conditions, but the terminal or base station still performs beam prediction based on this algorithm, it will cause the base station to obtain incorrect optimal beam information, affecting the performance of downlink transmission. Therefore, it is necessary to consider the performance monitoring problem of AI/ML models, for purposes such as model activation, deactivation, selection, switching, fallback, and updating, so that the beam management algorithm can be updated according to changes in circumstances.

As described above, using AI or ML technology for beam management primarily aims to save the number of beams transmitted by the base station and the number of beams measured by the terminal, or to predict future beam information, thereby saving air interface resources and the energy consumption of the base station and terminal. However, to perform model monitoring, it is still necessary to transmit beams in SetA to obtain a performance comparison between the actual optimal beam and the predicted optimal beam. Therefore, air interface resources, base station energy consumption, and terminal energy consumption are not saved..

### SUMMARY

The purpose of the embodiments of this disclosure is to provide a model monitoring method, apparatus, terminal, and network-side device, to solve the problem in the related art that model monitoring methods cannot save air interface resources, base station energy consumption, and terminal energy consumption.

To solve the above problem, an embodiment of this disclosure provides a model monitoring method. The method includes:
A terminal measures reference signals transmitted by a network-side device on beams of a first set;
The terminal monitors a model according to an associated beam set or an angle direction set of optimal N beams in the first set; N is an integer greater than or equal to 1.

Wherein, the method further includes:
If a predicted optimal beam is within the associated beam set, or, if an angle direction of the predicted optimal beam is within the angle direction set, determining that the model is available;
   Or,
If the predicted optimal beam is not within the associated beam set, or, if the angle direction of the predicted optimal beam is not within the angle direction set, determining that the model is unavailable.

Wherein, if the predicted optimal beam is not within the associated beam set, or, if the angle direction of the predicted optimal beam is not within the angle direction set, determining that the model is unavailable, includes:
If a predicted optimal beam is not within the associated beam set for M1 consecutive times, or, if an angle direction of a predicted optimal beam is not within the angle direction set for M2 consecutive times, determining that the model is unavailable; M1, M2 are integers greater than 1;
   Or,
If a probability that the predicted optimal beam is not within the associated beam set is greater than a first threshold, or, if a probability that the angle direction of the predicted optimal beam is not within the angle direction set is greater than a second threshold, determining that the model is unavailable.

Wherein, the method further includes:
The terminal determines the optimal N beams in the first set according to reference signals measured on beams of the first set; or, the terminal determines the optimal N beams in the first set according to reference signals measured on beams of the first set at a prediction time of a predicted optimal beam or at a second time; an absolute value of a difference between the second time and the prediction time is less than a first threshold;
The terminal determines the associated beam set or the angle direction set of the optimal N beams according to first information transmitted by the network-side device.

Wherein, the first information includes any one of the following:
Identification information of an associated beam for each beam in the first set;
Angle direction information for each beam in the first set;
Identification information of an associated beam for the N optimal beams in the first set;
Angle direction information for the N optimal beams in the first set.

Wherein, in a case where the first information includes: identification information of an associated beam for the N optimal beams in the first set; or, angle direction information for the N optimal beams in the first set, the method further includes:
The terminal transmits request information to the network-side device, the request information being used to request the network-side device to transmit identification information or angle direction information of an associated beam for the N optimal beams in the first set;
Wherein, the request information carries identification information of the N optimal beams in the first set.

Wherein, the method further includes:
The terminal transmits identification information of one or more predicted optimal beams to the network-side device;
The terminal receives an associated beam set or an angle direction set of the predicted optimal beam transmitted by the network-side device.

An embodiment of this disclosure further provides a model monitoring method. The method includes:
A network-side device transmits reference signals on beams of a first set;
The network-side device transmits first information, the first information including any one of the following:
   Identification information of an associated beam for each beam in the first set;
   Angle direction information for each beam in the first set;
   Identification information of an associated beam for N optimal beams in the first set;
   Angle direction information for the N optimal beams in the first set.

Wherein, in a case where the first information includes: identification information of an associated beam for the N optimal beams in the first set; or, angle direction information for the N optimal beams in the first set, the method further includes:
The network-side device receives request information transmitted by the terminal; the request information carries identification information of the N optimal beams in the first set;
The network-side device, according to the request information, transmits identification information or angle direction information of an associated beam for the N optimal beams in the first set to the terminal.

Wherein, the method further includes:
Receiving identification information of one or more predicted optimal beams transmitted by a terminal;
Transmitting an associated beam set or an angle direction set of the predicted optimal beam to the terminal.

An embodiment of this disclosure further provides a model monitoring method. The method includes:
A network-side device determines identification information of N optimal beams in a first set and identification information of a predicted optimal beam;
The network-side device monitors a model according to an associated beam set or an angle direction set of optimal N beams in the first set, and an identification or angle direction of the predicted optimal beam; N is an integer greater than or equal to 1.

Wherein, the method further includes:
If the predicted optimal beam is within the associated beam set, or, if an angle direction of the predicted optimal beam is within the angle direction set, determining that the model is available;
   Or,
If the predicted optimal beam is not within the associated beam set, or, if the angle direction of the predicted optimal beam is not within the angle direction set, determining that the model is unavailable.

Wherein, if the predicted optimal beam is not within the associated beam set, or, if the angle direction of the predicted optimal beam is not within the angle direction set, determining that the model is unavailable, includes:
If a predicted optimal beam is not within the associated beam set for M3 consecutive times, or, if an angle direction of a predicted optimal beam is not within the angle direction set for M4 consecutive times, determining that the model is unavailable; M3, M4 are integers greater than 1;
   Or,
If a probability that the predicted optimal beam is not within the associated beam set is greater than a first threshold, or, if a probability that the angle direction of the predicted optimal beam is not within the angle direction set is greater than a second threshold, determining that the model is unavailable.

Wherein, the network-side device determining identification information of N optimal beams in a first set and identification information of a predicted optimal beam, includes:
The network-side device acquires identification information of N optimal beams in the first set and identification information of a predicted optimal beam reported by a terminal.

Wherein, the network-side device determining identification information of N optimal beams in a first set and identification information of a predicted optimal beam, includes:
The network-side device receives a measurement result reported by a terminal, the measurement result being of reference signals transmitted on beams of the first set measured by the terminal;
The network-side device determines identification information of optimal N beams in the first set and identification information of a predicted optimal beam according to the measurement result.

Embodiments of the present disclosure also provide a terminal, comprising a memory, a transceiver, and a processor:
The memory is configured to store a computer program.

The transceiver is configured to transmit and receive data under control of the processor.

The processor is configured to read the computer program in the memory and perform the following operations:
Measuring reference signals transmitted by a network-side device on beams in a first set;
Monitoring a model based on an associated beam set or an angle direction set of optimal N beams in the first set; wherein N is an integer greater than or equal to 1.

Wherein, the processor is further configured to read the computer program in the memory and perform the following operation:
If a predicted optimal beam is within the associated beam set, or an angle direction of the predicted optimal beam is within the angle direction set, determining that the model is available;
   or,
If the predicted optimal beam is not within the associated beam set, or the angle direction of the predicted optimal beam is not within the angle direction set, determining that the model is unavailable.

Wherein, the processor is further configured to read the computer program in the memory and perform the following operation:
If a predicted optimal beam is not within the associated beam set for M1 consecutive times, or an angle direction of a predicted optimal beam is not within the angle direction set for M2 consecutive times, determining that the model is unavailable; wherein M1 and M2 are integers greater than 1;
   or,
If a probability that a predicted optimal beam is not within the associated beam set is greater than a first threshold, or a probability that an angle direction of a predicted optimal beam is not within the angle direction set is greater than a second threshold, determining that the model is unavailable.

Wherein, the processor is further configured to read the computer program in the memory and perform the following operations:
Determining the optimal N beams in the first set based on reference signals measured on beams in the first set; or, determining the optimal N beams in the first set based on reference signals measured on beams in the first set at a prediction moment for predicting an optimal beam or at a second moment; wherein an absolute value of a difference between the second moment and the prediction moment is less than a first threshold value;
Determining the associated beam set or the angle direction set of the optimal N beams based on first information transmitted by the network-side device.

Wherein, the first information comprises any one of the following:
Identification information of associated beams of each beam in the first set;
Angle direction information of each beam in the first set;
Identification information of associated beams of the optimal N beams in the first set;
Angle direction information of the optimal N beams in the first set.

Wherein, in a case where the first information comprises: identification information of associated beams of the optimal N beams in the first set; or, angle direction information of the optimal N beams in the first set; the processor is further configured to read the computer program in the memory and perform the following operation:
Transmitting request information to the network-side device, the request information being used to request the network-side device to transmit identification information or angle direction information of associated beams of the optimal N beams in the first set;
Wherein, the request information carries identification information of the optimal N beams in the first set.

Wherein, the processor is further configured to read the computer program in the memory and perform the following operations:
Transmitting identification information of one or more predicted optimal beams to the network-side device;
Receiving an associated beam set or an angle direction set of the predicted optimal beam transmitted by the network-side device.

Embodiments of the present disclosure also provide a model monitoring apparatus, the apparatus comprising:
A first measurement unit, configured to measure reference signals transmitted by a network-side device on beams in a first set;
A first monitoring unit, configured to monitor a model based on an associated beam set or an angle direction set of optimal N beams in the first set; wherein N is an integer greater than or equal to 1.

Embodiments of the present disclosure also provide a network-side device, comprising a memory, a transceiver, and a processor:
The memory is configured to store a computer program.

The transceiver is configured to transmit and receive data under control of the processor.

The processor is configured to read the computer program in the memory and perform the following operations:
Transmitting reference signals on beams in a first set;
Transmitting first information, the first information comprising any one of the following:
   Identification information of associated beams of each beam in the first set;
   Angle direction information of each beam in the first set;
   Identification information of associated beams of optimal N beams in the first set;
   Angle direction information of the optimal N beams in the first set.

Wherein, in a case where the first information comprises: identification information of associated beams of the optimal N beams in the first set; or, angle direction information of the optimal N beams in the first set; the processor is further configured to read the computer program in the memory and perform the following operations:
Receiving request information transmitted by the terminal; wherein the request information carries identification information of the optimal N beams in the first set;
Transmitting identification information or angle direction information of associated beams of the optimal N beams in the first set to the terminal according to the request information.

Wherein, the processor is further configured to read the computer program in the memory and perform the following operations:
Receiving identification information of one or more predicted optimal beams transmitted by a terminal;
Transmitting an associated beam set or an angle direction set of the predicted optimal beam to the terminal.

Embodiments of the present disclosure also provide a model monitoring apparatus, the apparatus comprising:
A first transmitting unit, configured to transmit reference signals on beams in a first set;
A second transmitting unit, configured to transmit first information, the first information comprising any one of the following:
   Identification information of associated beams of each beam in the first set;
   Angle direction information of each beam in the first set;
   Identification information of associated beams of optimal N beams in the first set;
   Angle direction information of the optimal N beams in the first set.

Embodiments of the present disclosure also provide a network-side device, comprising a memory, a transceiver, and a processor:
The memory is configured to store a computer program.

The transceiver is configured to transmit and receive data under control of the processor.

The processor is configured to read the computer program in the memory and perform the following operations:
Determining identification information of optimal N beams in a first set and identification information of a predicted optimal beam;
Monitoring the model based on an associated beam set or an angle direction set of the optimal N beams in the first set, and an identification or angle direction of the predicted optimal beam; wherein N is an integer greater than or equal to 1.

Wherein, the processor is further configured to read the computer program in the memory and perform the following operation:
If the predicted optimal beam is within the associated beam set, or the angle direction of the predicted optimal beam is within the angle direction set, determining that the model is available;
   or,
If the predicted optimal beam is not within the associated beam set, or the angle direction of the predicted optimal beam is not within the angle direction set, determining that the model is unavailable.

Wherein, the processor is further configured to read the computer program in the memory and perform the following operation:
If a predicted optimal beam is not within the associated beam set for M3 consecutive times, or an angle direction of a predicted optimal beam is not within the angle direction set for M4 consecutive times, determining that the model is unavailable; wherein M3 and M4 are integers greater than 1;
   or,
If a probability that a predicted optimal beam is not within the associated beam set is greater than a first threshold, or a probability that an angle direction of a predicted optimal beam is not within the angle direction set is greater than a second threshold, determining that the model is unavailable.

Wherein, the processor is further configured to read the computer program in the memory and perform the following operation:
Acquiring identification information of optimal N beams in the first set and identification information of a predicted optimal beam reported by a terminal.

Wherein, the processor is further configured to read the computer program in the memory and perform the following operations:
Receiving a measurement result, reported by a terminal, of reference signals transmitted by the terminal on beams in the first set;
Determining identification information of optimal N beams in the first set and identification information of a predicted optimal beam according to the measurement result.

Embodiments of the present disclosure also provide a model monitoring apparatus, the apparatus comprising:
A first determining unit, configured to determine identification information of optimal N beams in a first set and identification information of a predicted optimal beam;
A second monitoring unit, configured to monitor the model based on an associated beam set or an angle direction set of the optimal N beams in the first set, and an identification or angle direction of the predicted optimal beam; wherein N is an integer greater than or equal to 1.

Embodiments of the present disclosure also provide a processor-readable storage medium, the processor-readable storage medium storing a computer program, the computer program being configured to cause a processor to execute the method as described above.

The above technical solution of the present disclosure has at least the following beneficial effects:
In the model monitoring method, apparatus, terminal, and network-side device of the embodiments of the present disclosure, the model is monitored based on the associated beam set or angle direction set of the optimal N beams in the first set; it is possible to implement model monitoring without the network side transmitting the entire beam set, thereby saving air interface resources, network energy consumption, and terminal energy consumption.

### BRIEF DESCRIPTION OF THE DRAWINGS

Fig. 1 shows a block diagram of a wireless communication system applicable to an embodiment of the present disclosure;
Fig. 2 shows a first flowchart of steps of a model monitoring method provided by an embodiment of the present disclosure;
Fig. 3 shows a second flowchart of steps of the model monitoring method provided by an embodiment of the present disclosure;
Fig. 4 shows a schematic diagram of a principle of Example One provided by an embodiment of the present disclosure;
Fig. 5 shows a schematic diagram of a principle of Example Two provided by an embodiment of the present disclosure;
Fig. 6 shows a third flowchart of steps of the model monitoring method provided by an embodiment of the present disclosure;
Fig. 7 shows a structural schematic diagram of a terminal provided by an embodiment of the present disclosure;
Fig. 8 shows a first structural schematic diagram of a model monitoring apparatus provided by an embodiment of the present disclosure;
Fig. 9 shows a first structural schematic diagram of a network-side device provided by an embodiment of the present disclosure;
Fig. 10 shows a second structural schematic diagram of the model monitoring apparatus provided by an embodiment of the present disclosure;
Fig. 11 shows a second structural schematic diagram of the network-side device provided by an embodiment of the present disclosure;
Fig. 12 shows a third structural schematic diagram of the model monitoring apparatus provided by an embodiment of the present disclosure.

### DETAILED DESCRIPTION

To make the technical problem to be solved by the present disclosure, the technical solutions, and the advantages clearer, a detailed description will be provided below in conjunction with the accompanying drawings and specific embodiments.

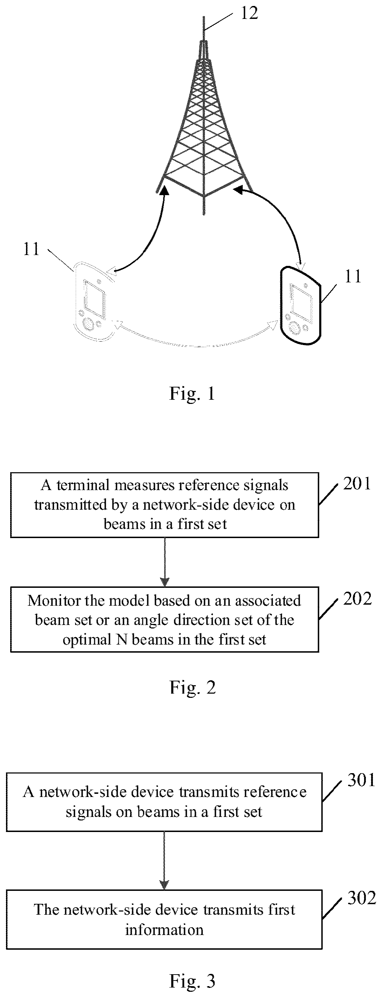

FIG. 1 illustrates a block diagram of a wireless communication system applicable to an embodiment of the present disclosure. The wireless communication system includes a terminal device 11 and a network device 12. The terminal device 11 may also be referred to as a terminal or a User Equipment (UE). It should be noted that the specific type of the terminal 11 is not limited in the embodiments of the present disclosure. The network device 12 may be a base station or a core network. It should be noted that in the embodiments of the present disclosure, only a base station in an NR system is taken as an example, but the specific type of the base station is not limited.

In the embodiments of the present disclosure, the term "and/or" describes an association relationship of associated objects, indicating that three relationships may exist. For example, "A and/or B" may indicate the following three cases: existence of A alone, simultaneous existence of A and B, or existence of B alone. The character "/" generally indicates that the associated objects before and after it are in an "or" relationship.

In the embodiments of the present disclosure, the term "a plurality of" refers to two or more, and other quantifiers are similar.

The technical solutions in the embodiments of the present disclosure will be clearly and completely described below in conjunction with the accompanying drawings in the embodiments of the present disclosure. It is apparent that the described embodiments are only a part of the embodiments of the present disclosure, rather than all of the embodiments. Based on the embodiments in the present disclosure, all other embodiments obtained by a person of ordinary skill in the art without creative efforts shall fall within the protection scope of the present disclosure.

The technical solutions provided by the embodiments of the present disclosure may be applied to various systems, especially a fifth-generation mobile communication (5th-Generation, 5G) system. For example, applicable systems may include a global system of mobile communication (GSM) system, a code division multiple access (CDMA) system, a Wideband Code Division Multiple Access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G New Radio (NR) system, and the like. These various systems all include terminal devices and network devices. The systems may also include a core network part, such as an Evolved Packet System (EPS), a 5G System (5GS), and the like.

The terminal device involved in the embodiments of the present disclosure may refer to a device that provides voice and/or data connectivity to a user, a handheld device with wireless connection capability, or another processing device connected to a wireless modem. The name of the terminal device may also differ in different systems. For example, in a 5G system, the terminal device may be referred to as a User Equipment (UE). A wireless terminal device may communicate with one or more core networks (CN) via a Radio Access Network (RAN). The wireless terminal device may be a mobile terminal device, such as a mobile phone (or "cellular" phone) and a computer having a mobile terminal device, for example, it may be a portable, pocket-sized, handheld, computer-built-in, or vehicle-mounted mobile device that exchanges language and/or data with the wireless access network. For example, devices such as a Personal Communication Service (PCS) phone, a cordless telephone, a Session Initiated Protocol (SIP) phone, a Wireless Local Loop (WLL) station, a Personal Digital Assistant (PDA), etc. The wireless terminal device may also be referred to as a system, a subscriber unit, a subscriber station, a mobile station, a mobile, a remote station, an access point, a remote terminal, an access terminal, a user terminal, a user agent, a user device, which is not limited in the embodiments of the present disclosure.

The network device involved in the embodiments of the present disclosure may be a base station, and the base station may include a plurality of cells serving terminals. Depending on the specific application scenario, the base station may also be called an access point, or may be a device in an access network that communicates with wireless terminal devices over an air interface via one or more sectors, or other names. The network device may be used to convert received air frames into Internet Protocol (IP) packets and vice versa, acting as a router between the wireless terminal device and the rest of the access network, where the rest of the access network may include an Internet Protocol (IP) communication network. The network device may also coordinate management of attributes for the air interface. For example, the network device involved in the embodiments of the present disclosure may be a network device (Base Transceiver Station, BTS) in a Global System for Mobile communications (GSM) or Code Division Multiple Access (CDMA), may also be a network device (NodeB) in a Wide-band Code Division Multiple Access (WCDMA) system, may also be an evolved Node B (eNB or e-NodeB) in a long term evolution (LTE) system, a 5G base station (gNB) in a 5G network architecture (next generation system), or may be a Home evolved Node B (HeNB), a relay node, a femto base station, a pico base station, etc., which is not limited in the embodiments of the present disclosure. In some network structures, the network device may include a centralized unit (CU) node and a distributed unit (DU) node, and the centralized unit and the distributed unit may also be geographically separated.

The network device and the terminal device may each use one or more antennas for Multi Input Multi Output (MIMO) transmission. The MIMO transmission may be Single User MIMO (SU-MIMO) or Multiple User MIMO (MU-MIMO). Depending on the form and number of antenna combinations, the MIMO transmission may be two-dimensional MIMO (2D-MIMO), three-dimensional MIMO (3D-MIMO), Full Dimension MIMO (FD-MIMO), or massive MIMO (massive-MIMO), or may be diversity transmission, precoding transmission, beamforming transmission, etc.

It should be noted that AI-based beam prediction has two sub-use cases, including: spatial domain prediction of downlink beams and temporal domain prediction of downlink beams.

Spatial domain prediction of downlink beams means using measurement results from a beam set in Set B (SetB) to predict the optimal beam in a beam set in Set A (SetA). The beams in the SetB and SetA sets need to be within the same frequency range.

Here, the downlink beams in the SetB set are used for beam measurement, and the measurement results are used as input to the model; the beams in the SetA set are used for beam prediction, meaning the output predicted by the model is the optimal beam in the SetA set, or the optimal N beams, or the measurement results of the beams in the SetA set.

For spatial domain prediction of downlink beams, the relationship between SetA and SetB has the following two types:
Alt1: SetA and SetB are different (i.e., SetB is not a subset of SetA);
   For example, SetA is a beam set of CSI-RS, SetB is a beam set of SSB, using measurements of wide beams to predict the optimal beam of narrow beams, where the AI model can be deployed on the UE side or on the gNB side.
Alt2: SetB is a subset of SetA (SetA and SetB are different).

For example, SetA has 32 beams, SetB has 8 beams, measuring a small number of beams can predict the optimal beam in a set with more beams, thereby reducing the resources required for the base station to transmit reference signals and UE measurements, where the AI model can be deployed on the UE side or on the gNB side.

During each training or inference instance, the pattern of SetB beams within SetA can be fixed, meaning the pattern used for each training and inference is the same, or random, meaning each training or inference uses a different random pattern.

Temporal domain prediction of downlink beams means using past measurement results from a SetB beam set to predict the future optimal beam in a SetA beam set. The beams in the SetB and SetA sets need to be within the same frequency range. Here, beam sets measured in the past N+1 (t0, t1, ...tN) recent measurement instances can be used to predict the optimal beam for future X (X>=1) time instances, where the AI model can be deployed on the UE side or on the gNB side.

For temporal domain prediction of downlink beams, the relationship between SetA and SetB has the following three types:
Alt1: SetA and SetB are different (i.e., SetB is not a subset of SetA);
   For example, SetA is a beam set of CSI-RS, SetB is a beam set of SSB, using measurements of wide beams to predict the optimal beam of narrow beams.
Alt2: SetB is a subset of SetA (SetA and SetB are different);

For example, SetA has 32 beams, SetB has 8 beams, measuring a small number of beams can predict the optimal beam in a set with more beams, thereby reducing UE measurement or reporting.
Alt3: SetB and SetA are identical.

For example, SetA has 32 beams, and SetB also has the same 32 beams. In this scenario, UE measurement or reporting volume would be very large and impractical to implement; however, this scenario can mainly be used to study the performance of pure temporal domain prediction. Therefore, this scenario still has value for simulation and research.

During each training or inference instance, the pattern of SetB beams within SetA can be fixed, meaning the pattern used for each training and inference is the same, or random, meaning each training or inference uses a different random pattern.

For both spatial domain prediction of downlink beams and temporal domain prediction of downlink beams, the types of beams that can be predicted include:
Alt1: Downlink Tx beam prediction;
Alt2: Downlink Rx beam prediction;
Alt3: Downlink beam pair prediction (a beam pair includes one downlink Tx beam and its corresponding downlink Rx beam).

As shown in FIG. 2, an embodiment of the present disclosure provides a model monitoring method. The method includes:
Step 201: A terminal measures reference signals transmitted by a network-side device on beams in a first set;
Step 202: Monitor the model based on an associated beam set or an angle direction set of the optimal N beams in the first set; N is an integer greater than or equal to 1.

Optionally, the first set is a beam subset of network-side downlink beams, namely Set B. The entire set of network-side downlink beams is called the overall beam set or Set A; it is assumed that the beams of Set B are relatively uniformly distributed within Set A. Therefore, the optimal beam of Set B and the optimal beam of Set A are approximately the same or similar in spatial direction. Because the positions of the terminal and the base station are fixed, and the channel environment remains unchanged at the same time, the spatial direction of the optimal beam of Set B and the optimal beam of Set A will not deviate significantly; it may be among adjacent or neighboring beams, and the angle direction will also not deviate significantly. Therefore, the beam associated with a beam in Set B within Set A can be its adjacent or neighboring beams. For example, the beam associated with beam 1 in Set B is M adjacent beams of beam 1 in the beam pattern of Set A, where M is an integer greater than or equal to 1, meaning the beams spatially adjacent to beam 1 are the associated beams of beam 1. Therefore, embodiments of the present disclosure monitor the model using the associated beam set or angle direction set of the optimal N beams in Set B, enabling model monitoring without the network side transmitting beams of Set A, thereby saving air interface resources, network energy consumption, and terminal energy consumption.

In at least one embodiment of the present disclosure, the method further includes:
If the predicted optimal beam is within the associated beam set, or, if the angle direction of the predicted optimal beam is within the angle direction set, determining that the model is available;
   Or,
If the predicted optimal beam is not within the associated beam set, or, if the angle direction of the predicted optimal beam is not within the angle direction set, determining that the model is unavailable.

Optionally, the predicted optimal beam can be understood as: the optimal beam predicted by the terminal using an AI model or ML module, which may be one optimal beam or multiple optimal beams; this is not specifically limited here.

For example, if the beam Identifier (ID) of the optimal beam predicted by the model is within the beam ID set corresponding to the associated beam set, it indicates that the model is available; otherwise, the model is unavailable; or, if the angle direction of the optimal beam predicted by the model is within the angle direction set, it indicates that the model is available; otherwise, the model is unavailable.

As an optional embodiment, determining that the model is unavailable if the predicted optimal beam is not within the associated beam set, or if the angle direction of the predicted optimal beam is not within the angle direction set, includes:
If the predicted optimal beam is not within the associated beam set for M1 consecutive times, or, if the angle direction of the predicted optimal beam is not within the angle direction set for M2 consecutive times, determining that the model is unavailable; M1 and M2 are integers greater than 1.

Or, determining that the model is unavailable if the predicted optimal beam is not within the associated beam set, or if the angle direction of the predicted optimal beam is not within the angle direction set, includes:

If the probability that the predicted optimal beam is not within the associated beam set is greater than a first threshold, or, if the probability that the angle direction of the predicted optimal beam is not within the angle direction set is greater than a second threshold, determining that the model is unavailable.

For example, statistically count multiple times whether the predicted optimal beam is within the associated beam set, and calculate the probability that the predicted optimal beam is not within the associated beam set based on the statistical results. For example, count 100 times whether the predicted optimal beam is within the associated beam set; if in 80 instances the predicted optimal beam is not within the associated beam set, the probability that the predicted optimal beam is not within the associated beam set is 80/100. If the first threshold is 50%, then the probability 80% is greater than 50%, and it is determined that the model is unavailable.

Optionally, the first threshold or the second threshold is network-configured or pre-configured.

In at least one embodiment of the present disclosure, the method further includes:
The terminal determines the optimal N beams in the first set based on reference signals measured on beams in the first set; or, the terminal determines the optimal N beams in the first set based on reference signals measured on beams in the first set at a prediction time of the predicted optimal beam or at a second time; the absolute value of the difference between the second time and the prediction time is less than a first threshold;
The terminal determines the associated beam set or angle direction set of the optimal N beams based on first information transmitted by the network-side device.

Optionally, the first threshold may be network-configured, pre-configured, or pre-agreed; this is not specifically limited here.

For example, for spatial domain beam prediction, after receiving beams of the first set, the terminal obtains the optimal N beams in the first set, and the associated beam set corresponding to these N optimal beams or the angle direction set corresponding to these N optimal beams, thereby monitoring whether the model is available.

As another example, for temporal domain beam prediction, the terminal needs to use beams of the first set received at the prediction time of the optimal beam predicted by the model or at a second time to obtain the optimal N beams, and the associated beam set corresponding to these N optimal beams or the angle direction set corresponding to these N optimal beams, thereby monitoring whether the model is available. Here, the absolute value of the difference between the second time and the prediction time is less than the first threshold.

As an optional embodiment, the first information includes any one of the following:
Identification information of the associated beam(s) for each beam in the first set;
Angle direction information for each beam in the first set;
Identification information of the associated beam(s) for the N optimal beams in the first set;
Angle direction information for the N optimal beams in the first set.

Optionally, in the case where the first information includes: identification information of the associated beam(s) for the N optimal beams in the first set; or, angle direction information for the N optimal beams in the first set, the method further includes:
The terminal transmits request information to the network-side device, where the request information is used to request the network-side device to transmit the identification information or angle direction information of the associated beam(s) for the N optimal beams in the first set;
Wherein the request information carries identification information of the N optimal beams in the first set.

As an optional embodiment, the method further includes:
The terminal transmits identification information of the one or more predicted optimal beams to the network-side device;
The terminal receives the associated beam set or angle direction set of the predicted optimal beam transmitted by the network-side device.

For example, the base station transmits first information, including the associated beam Identifier (ID) for each beam in the first set. The first information can be sent using Radio Resource Control (RRC) signaling or a Medium Access Control Control Element (MAC CE). For example, the first information includes the beam ID in the first set and its list of associated beam IDs. The base station transmits beams in the first set. After the terminal measures the first set, it obtains the optimal N beams in the first set and the associated beam set composed of the associated beams corresponding to each of these N beams. The terminal compares this associated beam set with the optimal beam predicted by the AI model to perform model monitoring. For example, by comparing beam IDs, if the optimal beam predicted by the AI model is within this associated beam set, it indicates the AI model is available; otherwise, the AI model is unavailable.

As another example, the base station transmits beams in the first set. After the terminal measures the first set, it obtains the optimal N beams in the first set. The terminal informs the base station of these obtained N optimal beams. The base station then informs the terminal of the associated beam set corresponding to these N optimal beams. The terminal compares this associated beam set with the optimal beam predicted by the AI model to perform model monitoring. For example, by comparing beam IDs, if the optimal beam predicted by the AI model is within this associated beam set, it indicates the AI model is available; otherwise, the AI model is unavailable.

As yet another example, the base station transmits first information, including the associated beam ID for each beam in the first set. The first information can be sent using RRC signaling or MAC CE. For example, the first information includes the beam ID in the first set and its angle direction information. The base station transmits beams in the first set. After the terminal measures the first set, it obtains the optimal N beams in the first set and the angle direction set corresponding to each of these N beams. The terminal informs the base station of the optimal beam predicted by the AI model and obtains the angle direction of this optimal beam from the base station side. The terminal compares this angle direction set with the angle direction of the optimal beam predicted by the AI model to perform model monitoring. For example, by comparing angle directions, if the angle direction of the optimal beam predicted by the AI model is within this angle direction set, it indicates the AI model is available; otherwise, the AI model is unavailable.

As yet another example, the base station transmits beams in the first set. After the terminal measures the first set, it obtains the optimal N beams in the first set. The terminal informs the base station of these obtained N optimal beams and the optimal beam predicted by the AI model. The base station then informs the terminal of the angle direction set corresponding to these N optimal beams and the angle direction of the optimal beam predicted by the AI model. The terminal compares this angle direction set with the angle direction of the optimal beam predicted by the AI model to perform model monitoring. For example, by comparing angle directions, if the angle direction of the optimal beam predicted by the AI model is within this angle direction set, it indicates the AI model is available; otherwise, the AI model is unavailable.

In summary, embodiments of the present disclosure monitor the model based on the associated beam set or angle direction set of the optimal N beams in the first set; enabling model monitoring without the network side transmitting the overall beam set, thereby saving air interface resources, network energy consumption, and terminal energy consumption.

As shown in FIG. 3, an embodiment of the present disclosure further provides a model monitoring method. The method includes:
Step 301: A network-side device transmits reference signals on beams in a first set;
Step 302: The network-side device transmits first information, where the first information includes any one of the following:
   Identification information of the associated beam(s) for each beam in the first set;
   Angle direction information for each beam in the first set;
   Identification information of the associated beam(s) for N optimal beams in the first set;
   Angle direction information for the N optimal beams in the first set.

Optionally, the first set is a subset of network-side downlink beams, namely Set B.

Herein, the first information is used to assist the terminal in performing model monitoring. If the optimal beam predicted by the terminal is within the associated beam set, or if the angle direction of the optimal beam predicted by the terminal is within the angle direction set, it is determined that the model is available; if the optimal beam predicted by the terminal is not within the associated beam set, or if the angle direction of the optimal beam predicted by the terminal is not within the angle direction set, it is determined that the model is unavailable.

Embodiments of the present disclosure monitor the model using the associated beam set or angle direction set of the optimal N beams in Set B, enabling model monitoring without the network side transmitting downlink beams of Set A, thereby saving air interface resources, base station energy consumption, and terminal energy consumption.

As an optional embodiment, in the case where the first information includes: identification information of the associated beam(s) for the N optimal beams in the first set; or, angle direction information for the N optimal beams in the first set, the method further includes:
The network-side device receives request information transmitted by the terminal; the request information carries identification information of the N optimal beams in the first set;
The network-side device, based on the request information, transmits identification information or angle direction information of the associated beam(s) for the N optimal beams in the first set to the terminal.

As another optional embodiment, the method further includes:
Receiving identification information of one or more predicted optimal beams transmitted by the terminal;
Transmitting the associated beam set or angle direction set of the predicted optimal beam to the terminal.

Optionally, the predicted optimal beam can be understood as: the optimal beam predicted by the terminal using an AI model or ML module, which may be one optimal beam or multiple optimal beams; this is not specifically limited here.

In summary, the network-side device, through the first information, assists the terminal in monitoring the model based on the associated beam set or angle direction set of the optimal N beams in the first set; enabling model monitoring without the network side transmitting the overall beam set, thereby saving air interface resources, network energy consumption, and terminal energy consumption.

To better describe the aforementioned model monitoring method, the following two examples are provided for illustration.

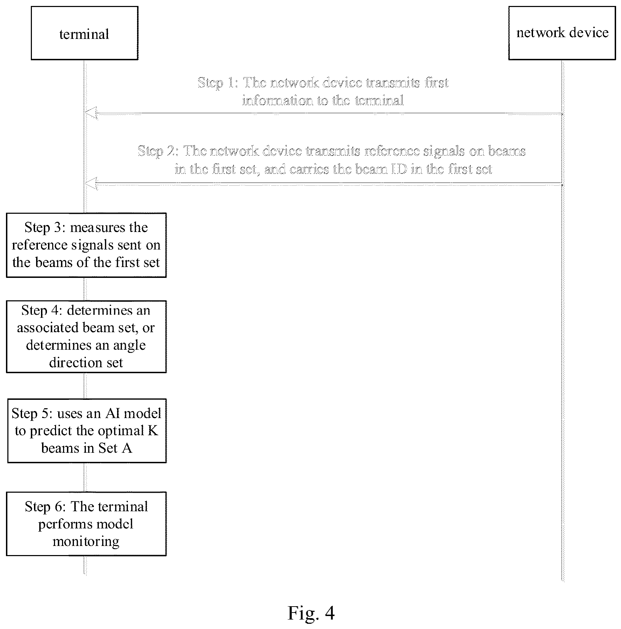

Example 1, as shown in FIG. 4:
Step 1: The network device transmits first information to the terminal;
Wherein, the first information includes: the associated beam ID for each beam in the first set or the angle direction information for each beam;
For example, the first information may be configuration information sent via RRC signaling, or indication information sent via a MAC CE, etc.

For instance, the first information includes the beam ID in the first set and its list of associated beam IDs. For example, it configures that the associated beam IDs for beam ID=1 in the first set are 1, 2, 3 (where the associated beams include itself), and the associated beam IDs for beam ID=2 in the first set are 2, 3, 4.

For instance, the first information includes the beam ID in the first set and its corresponding angle direction information. For example, it configures that the angle direction for beam ID=1 in the first set is A1, and the angle direction for beam ID=2 in the first set is A2.

Wherein A1, A2 can be angles in the Global Coordinate System (GCS), or angles in a standard-defined angular coordinate system, or angles in a configured or pre-configured angular coordinate system, etc.

Step 2: The network device transmits reference signals to the terminal on beams in the first set, and carries the beam ID in the first set on the transmitted beams (this beam ID is the beam ID in the first set included in the first information, e.g., ID=1 and ID=2).

Step 3: The terminal receives the beams in the first set, measures the reference signals sent on the beams of the first set, obtains beam measurement results for the first set, and selects the optimal N beams from them.

The terminal selects the N beams with the largest measurement results as the optimal beams based on the measurement results. For example, the selected optimal beams are beams with ID=1 and ID=2.

Measurement results can include Reference Signal Received Power (RSRP), Reference Signal Received Quality (RSRQ), Signal to Interference and Noise Ratio (SINR), Channel Impulse Response (CIR), Power Delay Profile (PDP), etc.

Step 4: The terminal, based on the first information and the beam ID information of the optimal N beams in the first set, determines the associated beam(s) corresponding to each beam among these optimal N beams, forms an associated beam set, or determines the angle direction information of these optimal N beams to form an angle direction set.

The terminal determines the associated beam ID set for the optimal N beams based on the beam IDs in the first set configured by the base station and their lists of associated beam IDs.

For example, based on the associated beam list for beam ID=1, it determines the beam IDs in the associated beam set are 1, 2, 3. Based on the associated beam list for beam ID=2, it determines the beam IDs are 2, 3, 4. Therefore, it can determine the associated beam ID set is 1, 2, 3, 4.

The terminal determines the angle direction set for the optimal N beams based on the beam IDs in the first set configured by the base station and their angle direction information;
For example, based on the angle direction A1 for beam ID=1 and angle direction A2 for beam ID=2, it determines the angle direction set is A1, A2.

Step 5: The terminal uses the measurement results of the first set and an AI model to predict the optimal K beams in SetA;
The measurement results of the first set serve as input to the AI model.

Step 4 and Step 5 are performed in parallel, with no specific order required.

Step 6: The terminal compares this associated beam set or angle direction set with the optimal beam predicted by the AI model to monitor whether the model is available; or, the terminal needs to inform the base station of the optimal beam predicted by the AI model and obtain the angle direction information of this optimal beam from the base station side. Then, the terminal compares this angle direction set with the angle direction of the optimal beam predicted by the AI model to perform model monitoring.

By comparing beam IDs, if the optimal beam predicted by the AI model is within this associated beam set, it indicates the AI model is available; otherwise, the AI model is unavailable.

For example, if the beam ID of the optimal beam predicted by the AI model is 3, and it is within the associated beam set, it indicates the AI model is available.

Or, by comparing angle directions, if the angle direction of the optimal beam predicted by the AI model is within this angle direction set, it indicates the AI model is available; otherwise, the AI model is unavailable.

For example, if the angle direction of the optimal beam predicted by the AI model is A3, and it is within the angle direction set (meaning within the angular range defined by A1 and A2, not necessarily equal to A1 or A2), it indicates the AI model is available.

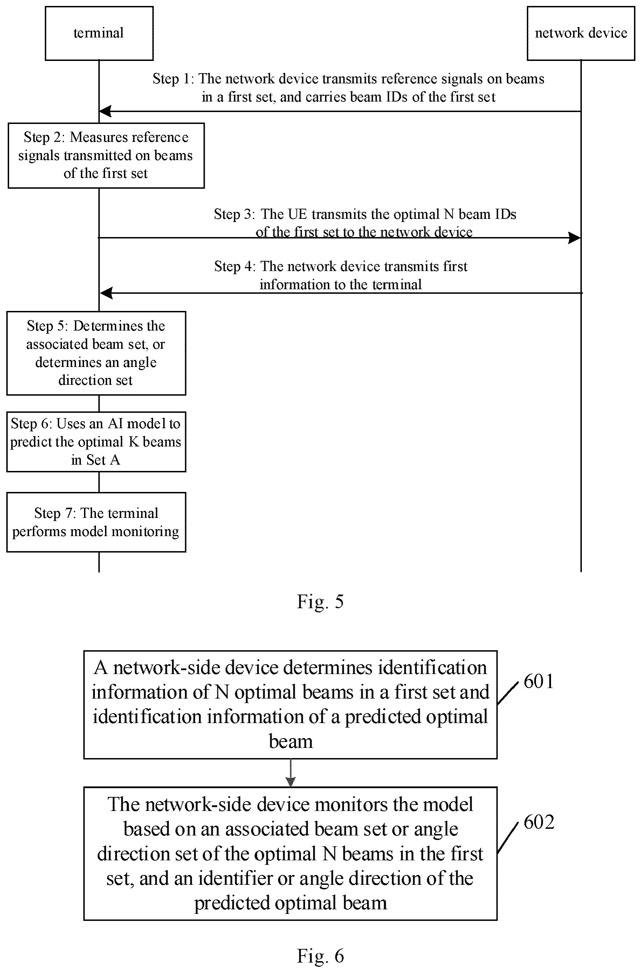

Example 2: As shown in Fig. 5:
Step 1: The network device transmits reference signals to the terminal on beams in a first set, and carries beam IDs of the first set on these transmission beams (these beam IDs are beam IDs of the first set contained in first information, e.g., ID=1 and ID=2).
Step 2: The terminal receives beams in the first set, measures reference signals transmitted on beams of the first set to obtain beam measurement results of the first set, and selects N optimal beams therefrom.

Based on the measurement results, the terminal selects N beams with the largest measurement results as optimal beams, for example, the selected optimal beams being beams with ID=1 and ID=2.

Measurement results may include received RSRP, RSRQ, SINR, CIR, PDP, etc.

Step 3: The UE transmits the optimal N beam IDs of Set B to the network device.

This may be transmitted to the network device via physical layer signals such as Physical Uplink Shared Channel (PUSCH) or Physical Uplink Control Channel (PUCCH), or higher layer signaling such as MAC CE or RRC.

Step 4: The network device transmits first information to the terminal;
wherein the first information includes: associated beam IDs or angle direction information of the optimal N beams of the first set.

The associated beam IDs or angle direction information corresponding to the optimal N beams of the first set are transmitted to the terminal via physical layer signals PDSCH or PDCCH, or higher layer signaling such as MAC CE or RRC.

For example, the ID of the associated beam for beam ID=1 of the first set is 1,2,3 (wherein its associated beam includes itself), and the ID of the associated beam for beam ID=2 of the first set is 2,3,4.

As another example, the angle direction for beam ID=1 of the first set is A1, and the angle direction for Set B beam ID=2 is A2.

Herein, A1 and A2 may be angles in a Global Coordinate System (GCS), angles in an angle coordinate system specified by standards, or angles in a configured or preconfigured angle coordinate system.

Step 5: The terminal receives the associated beam corresponding to each beam among the optimal N beams in the first set to form an associated beam set, or receives angle direction information of each beam among the optimal N beams in the first set to form an angle direction set.

The terminal receives the associated beams corresponding to each beam among the optimal N beams in the first set transmitted by the base station, and determines an associated beam ID set of the optimal N beams.

For example, based on the associated beam ID 1,2,3 for beam ID=1 and the associated beam ID 2,3,4 for beam ID=2, the associated beam ID set can be determined as 1,2,3,4.

The terminal determines an angle direction set of the optimal N beams based on the angle direction information of each beam among the optimal N beams in the first set transmitted by the base station.

For example, based on angle direction A1 of beam ID=1 and angle direction A2 of beam ID=2, the angle direction set is determined as A1, A2.

Step 6: The terminal uses measurement results of the first set and an AI model to predict optimal K beams in Set A;
The measurement results of the first set serve as input to the AI model.

Steps 5 and 6 are executed in parallel without distinguishing sequential order.

Step 7: The terminal compares the associated beam set or angle direction set with the optimal beam predicted by the AI model to monitor whether the model is usable; or, the terminal needs to inform the network device of the optimal beam predicted by the AI model (which may be transmitted together with the optimal N beams of the first set or separately to the network device), and obtains angle direction information of this optimal beam from the network device side. Then the terminal compares the angle direction set with the angle direction of the optimal beam predicted by the AI model to perform model monitoring.

By comparing beam IDs, if the optimal beam predicted by the AI model is within the associated beam set, the AI model is usable; otherwise, it is unusable.

For example, if the optimal beam predicted by the AI model has ID=3, which is within the associated beam set, the AI model is usable.

Alternatively, by comparing angle directions, if the angle direction of the optimal beam predicted by the AI model is within the angle direction set, the AI model is usable; otherwise, it is unusable.

For example, if the angle direction of the optimal beam predicted by the AI model is A3, which is within the angle direction set (being within the angular range formed by A1 and A2, not necessarily equal to A1 or A2), the AI model is usable.

As shown in Fig. 6, an embodiment of the present disclosure further provides a model monitoring method, comprising:
Step 601: A network-side device determines identification information of N optimal beams in a first set and identification information of a predicted optimal beam;
Step 602: The network-side device monitors the model based on an associated beam set or angle direction set of the optimal N beams in the first set, and an identifier or angle direction of the predicted optimal beam; where N is an integer greater than or equal to 1.

In this embodiment of the present disclosure, the network-side device monitors the model through the associated beam set or angle direction set of the optimal N beams in the first set; model monitoring can be achieved without the network side transmitting the entire beam set, thereby conserving air interface resources, network energy consumption, and terminal energy consumption.

Optionally, the first set is a subset of network-side downlink beams, i.e., Set B. Assume that all downlink beams on the network side are called the entire set or Set A; beams of Set B are relatively evenly distributed in Set A. Therefore, the optimal beams of Set B and the optimal beams of Set A are approximately identical or similar in spatial direction. Since the terminal and base station positions are fixed and the channel environment remains unchanged at the same time, the spatial directions of the optimal beams of Set B and Set A will not deviate significantly, likely falling within adjacent or neighboring beams, and angle directions will also not deviate significantly. Thus, the associated beams of beams in Set B within Set A may be several adjacent or neighboring beams. For example, the associated beams for beam 1 in Set B are M adjacent beams of beam 1 in the beam pattern of Set A, where M is an integer greater than or equal to 1, i.e., beams spatially adjacent to beam 1 are its associated beams. Therefore, this embodiment achieves model monitoring through the associated beam set or angle direction set of the optimal N beams in Set B without requiring the network side to transmit downlink beams of Set A, thereby conserving air interface resources, network energy consumption, and terminal energy consumption.

In at least one embodiment of the present disclosure, the method further comprises:
if the predicted optimal beam is within the associated beam set, or if the angle direction of the predicted optimal beam is within the angle direction set, determining that the model is usable;
   or,
if the predicted optimal beam is not within the associated beam set, or if the angle direction of the predicted optimal beam is not within the angle direction set, determining that the model is unusable.

Optionally, the predicted optimal beam may be understood as: an optimal beam predicted by the terminal or network-side device using an AI model or ML module, which may be one optimal beam or multiple optimal beams, without specific limitation herein.

For example, if the beam ID of the optimal beam predicted by the model is within the beam ID set corresponding to the associated beam set, the model is usable; otherwise, it is unusable; or, if the angle direction of the optimal beam predicted by the model is within the angle direction set, the model is usable; otherwise, it is unusable.

As an optional embodiment, determining that the model is unusable if the predicted optimal beam is not within the associated beam set or its angle direction is not within the angle direction set comprises:
if the predicted optimal beam is not within the associated beam set for M3 consecutive times, or if the angle direction of the predicted optimal beam is not within the angle direction set for M4 consecutive times, determining that the model is unusable; where M3 and M4 are integers greater than 1;
   or,
if the probability of the predicted optimal beam not being within the associated beam set exceeds a first threshold, or if the probability of the angle direction of the predicted optimal beam not being within the angle direction set exceeds a second threshold, determining that the model is unusable.

For example, statistically determine multiple times whether the predicted optimal beam is within the associated beam set, and calculate the probability of it not being within the set based on statistical results. For instance, after 100 statistical trials, if the predicted optimal beam is not within the associated beam set 80 times, the probability is 80/100. If the first threshold is 50%, since 80% > 50%, the model is determined unusable.

Optionally, the first threshold or second threshold is network-configured or preconfigured.

As an optional embodiment, Step 601 comprises:
the network-side device acquires identification information of N optimal beams in the first set and identification information of a predicted optimal beam reported by the terminal.

In this embodiment, after obtaining the optimal N beams in the first set, the terminal reports these optimal N beams of the first set and the predicted optimal beam output by the AI model to the network-side device for model monitoring.

As another optional embodiment, Step 601 comprises:
the network-side device receives measurement results reported by the terminal for reference signals transmitted on beams of the first set;
the network-side device determines identification information of the optimal N beams in the first set and identification information of a predicted optimal beam based on the measurement results.

In this embodiment, the terminal only needs to report measurement results of the first set to the base station for model inference to predict the optimal beam. The network-side device can obtain the optimal N beams for model monitoring based on the pattern and measurement results of the first set.

In summary, in embodiments of the present disclosure, the network-side device monitors the model through the associated beam set or angle direction set of the optimal N beams in the first set. Model monitoring can be achieved without the network side transmitting the entire beam set, thereby conserving air interface resources, network energy consumption, and terminal energy consumption.

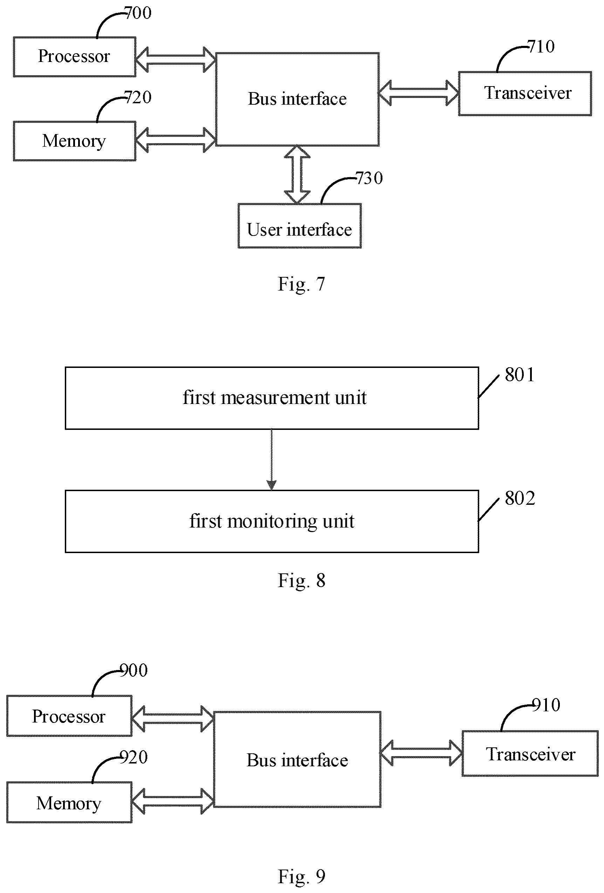

As shown in FIG. 7, an embodiment of the present disclosure further provides a terminal, comprising a memory 720, a transceiver 710, and a processor 700:
The memory 720 is configured to store a computer program;
The transceiver 710 is configured to transmit and receive data under control of the processor 700;
The processor 700 is configured to read the computer program in the memory 720 and perform the following operations:
   Measuring reference signals transmitted by a network-side device on beams in a first set;
   Monitoring a model according to an associated beam set or an angle direction set of optimal N beams in the first set; where N is an integer greater than or equal to 1.

As an optional embodiment, the processor is further configured to read the computer program in the memory and perform the following operation:
If a predicted optimal beam is within the associated beam set, or, an angle direction of the predicted optimal beam is within the angle direction set, determining that the model is available;
   Or,
If the predicted optimal beam is not within the associated beam set, or, the angle direction of the predicted optimal beam is not within the angle direction set, determining that the model is unavailable.

As an optional embodiment, the processor is further configured to read the computer program in the memory and perform the following operation:
If predicted optimal beams for consecutive M1 times are not within the associated beam set, or, angle directions of predicted optimal beams for consecutive M2 times are not within the angle direction set, determining that the model is unavailable; where M1 and M2 are integers greater than 1;
   Or,
If a probability that the predicted optimal beam is not within the associated beam set is greater than a first threshold, or, a probability that the angle direction of the predicted optimal beam is not within the angle direction set is greater than a second threshold, determining that the model is unavailable.

As an optional embodiment, the processor is further configured to read the computer program in the memory and perform the following operations:
Determining the optimal N beams in the first set according to reference signals measured on beams in the first set; or, determining the optimal N beams in the first set according to reference signals measured on beams in the first set at a prediction moment for predicting an optimal beam or at a second moment; where an absolute value of a difference between the second moment and the prediction moment is less than a first threshold;
Determining an associated beam set or an angle direction set of the optimal N beams according to first information transmitted by the network-side device.

As an optional embodiment, the first information comprises any one of the following:
Identification information of associated beams of each beam in the first set;
Angle direction information of each beam in the first set;
Identification information of associated beams of the optimal N beams in the first set;
Angle direction information of the optimal N beams in the first set.

As an optional embodiment, in a case where the first information comprises: identification information of associated beams of the optimal N beams in the first set; or, angle direction information of the optimal N beams in the first set, the processor is further configured to read the computer program in the memory and perform the following operation:
Transmitting request information to the network-side device, the request information being used to request the network-side device to transmit identification information or angle direction information of associated beams of the optimal N beams in the first set;
Wherein, the request information carries identification information of the optimal N beams in the first set.

As an optional embodiment, the processor is further configured to read the computer program in the memory and perform the following operations:
Transmitting identification information of one or more predicted optimal beams to the network-side device;
Receiving an associated beam set or an angle direction set of the predicted optimal beam transmitted by the network-side device.

Wherein, in FIG. 7, a bus architecture may include any number of interconnected buses and bridges, specifically linking together various circuits including one or more processors represented by the processor 700 and a memory represented by the memory 720. The bus architecture may also link together various other circuits such as peripherals, voltage regulators, and power management circuits, which are well known in the art, and therefore, will not be further described herein. A bus interface provides an interface. The transceiver 710 may be multiple elements, that is, including a transmitter and a receiver, providing units for communicating with various other apparatuses over a transmission medium. The transmission medium includes, but is not limited to, wireless channels, wired channels, optical cables, and other transmission media. For different user equipment, a user interface 730 may also be an interface capable of externally or internally connecting required devices, the connected devices including but not limited to a keypad, a display, a speaker, a microphone, a joystick, and the like.

The processor 700 is responsible for managing the bus architecture and general processing, and the memory 720 may store data used by the processor 700 when performing operations.

Optionally, the processor 700 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor, by invoking the computer program stored in the memory, is configured to execute any method provided by the embodiments of the present disclosure according to the obtained executable instructions. The processor and the memory may also be physically arranged separately.

In the embodiments of the present disclosure, the terminal monitors the model through an associated beam set or an angle direction set of optimal N beams in the first set; monitoring of the model can be implemented without the network side transmitting an entire beam set, thereby saving air interface resources, network energy consumption, and terminal energy consumption.

It should be noted herein that the terminal provided by the embodiments of the present disclosure can implement all method steps implemented by the foregoing method embodiments and achieve the same technical effects. Details and beneficial effects identical to those in the method embodiments will not be specifically reiterated herein.

As shown in FIG. 8, an embodiment of the present disclosure further provides a model monitoring apparatus. The apparatus includes:
a first measurement unit 801, configured to measure a reference signal transmitted by a network-side device on beams in a first set;
a first monitoring unit 802, configured to monitor a model according to an associated beam set or an angle direction set of the top N beams in the first set; where N is an integer greater than or equal to 1.

As an optional embodiment, the apparatus further includes:
a first determination unit, configured to determine that the model is available if a predicted optimal beam is within the associated beam set, or if an angle direction of the predicted optimal beam is within the angle direction set;
   or,
a second determination unit, configured to determine that the model is unavailable if the predicted optimal beam is not within the associated beam set, or if the angle direction of the predicted optimal beam is not within the angle direction set.

As an optional embodiment, the second determination unit is specifically configured to:
determine that the model is unavailable if a predicted optimal beam is not within the associated beam set for M1 consecutive times, or if an angle direction of a predicted optimal beam is not within the angle direction set for M2 consecutive times; where M1 and M2 are integers greater than 1;
   or,
determine that the model is unavailable if a probability that a predicted optimal beam is not within the associated beam set is greater than a first threshold, or if a probability that an angle direction of a predicted optimal beam is not within the angle direction set is greater than a second threshold.

As an optional embodiment, the apparatus further includes:
a third determination unit, configured to determine the top N beams in the first set according to a reference signal measured on beams in the first set; or, determine the top N beams in the first set according to a reference signal measured on beams in the first set at a prediction time of a predicted optimal beam or at a second time; where an absolute value of a difference between the second time and the prediction time is less than a first threshold;
a fourth determination unit, configured to determine an associated beam set or an angle direction set of the top N beams according to first information transmitted by the network-side device.

As an optional embodiment, the first information includes any one of the following:
identification information of an associated beam of each beam in the first set;
angle direction information of each beam in the first set;
identification information of an associated beam of the top N beams in the first set;
angle direction information of the top N beams in the first set.

As an optional embodiment, the apparatus further includes:
a first transmitting unit, configured to, in a case where the first information includes: identification information of an associated beam of the top N beams in the first set; or, angle direction information of the top N beams in the first set, transmit request information to the network-side device, the request information being used to request the network-side device to transmit identification information or angle direction information of an associated beam of the top N beams in the first set;
where the request information carries identification information of the top N beams in the first set.

As an optional embodiment, the apparatus further includes:
a second transmitting unit, configured to transmit identification information of one or more predicted optimal beams to the network-side device;
a receiving unit, configured to receive an associated beam set or an angle direction set of the predicted optimal beam transmitted by the network-side device.

It should be noted that the apparatus provided in the embodiment of the present disclosure can implement all method steps implemented in the foregoing method embodiment and achieve the same technical effects. Details of parts identical to those in the method embodiment and beneficial effects are not repeated herein.

As shown in FIG. 9, an embodiment of the present disclosure further provides a network-side device, including a memory 920, a transceiver 910, and a processor 900:
the memory 920 is configured to store a computer program;
the transceiver 910 is configured to transmit and receive data under control of the processor 900;
the processor 900 is configured to read the computer program in the memory 920 and perform the following operations:
   transmitting a reference signal on beams in a first set;
   transmitting first information, the first information including any one of the following:
      identification information of an associated beam of each beam in the first set;
      angle direction information of each beam in the first set;
      identification information of an associated beam of top N beams in the first set;
      angle direction information of the top N beams in the first set.

As an optional embodiment, in a case where the first information includes: identification information of an associated beam of the top N beams in the first set; or, angle direction information of the top N beams in the first set, the processor 900 is further configured to read the computer program in the memory and perform the following operations:
receiving request information transmitted by a terminal; the request information carrying identification information of the top N beams in the first set;
transmitting identification information or angle direction information of an associated beam of the top N beams in the first set to the terminal according to the request information.

As an optional embodiment, the processor 900 is further configured to read the computer program in the memory and perform the following operations:
receiving identification information of one or more predicted optimal beams transmitted by a terminal;
transmitting an associated beam set or an angle direction set of the predicted optimal beam to the terminal.

In FIG. 9, a bus architecture may include any number of interconnected buses and bridges, specifically linking various circuits including one or more processors represented by the processor 900 and a memory represented by the memory 920. The bus architecture may also link various other circuits, such as peripheral devices, voltage regulators, and power management circuits, which are well known in the art and therefore will not be further described herein. A bus interface provides an interface. The transceiver 910 may include multiple elements, i.e., a transmitter and a receiver, providing units for communicating with various other devices over transmission media. These transmission media include wireless channels, wired channels, optical cables, and other transmission media. The processor 900 is responsible for managing the bus architecture and general processing, and the memory 920 may store data used by the processor 900 when performing operations.

The processor 900 may be a CPU, ASIC, FPGA, or CPLD, and the processor may also adopt a multi-core architecture.

In the embodiment of the present disclosure, the terminal monitors the model according to an associated beam set or an angle direction set of the top N beams in the first set; it can implement model monitoring without the network side transmitting the entire beam set, thereby saving air interface resources, network energy consumption, and terminal energy consumption.

It should be noted that the network-side device provided in the embodiment of the present disclosure can implement all method steps implemented in the foregoing method embodiment and achieve the same technical effects. Details of parts identical to those in the method embodiment and beneficial effects are not repeated herein.

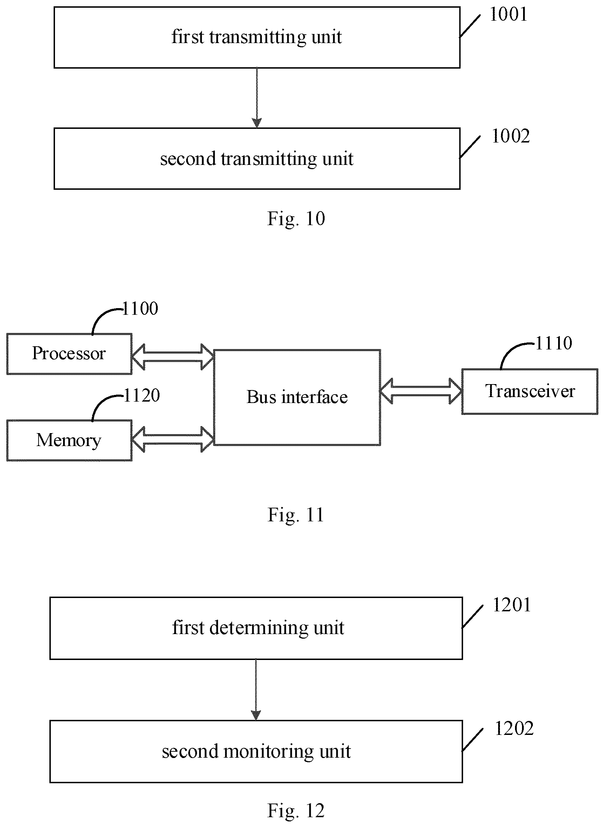

As shown in FIG. 10, an embodiment of the present disclosure further provides a model monitoring apparatus, comprising:
a first transmitting unit 1001, configured to transmit reference signals on beams in a first set;
a second transmitting unit 1002, configured to transmit first information, the first information comprising any one of the following:
   identification information of associated beams for each beam in the first set;
   angle direction information of each beam in the first set;
   identification information of associated beams for N optimal beams in the first set;
   angle direction information of N optimal beams in the first set.

As an optional embodiment, the apparatus further comprises:
a first receiving unit, configured to, when the first information comprises: identification information of associated beams for N optimal beams in the first set; or angle direction information of N optimal beams in the first set, receive request information transmitted by a terminal; the request information carrying identification information of the N optimal beams in the first set;
a third transmitting unit, configured to, according to the request information, transmit identification information or angle direction information of associated beams for the N optimal beams in the first set to the terminal.

As an optional embodiment, the apparatus further comprises:
a second receiving unit, configured to receive identification information of one or more predicted optimal beams transmitted by a terminal;
a fourth transmitting unit, configured to transmit a set of associated beams or a set of angle directions for the predicted optimal beam to the terminal.

It should be noted that the foregoing apparatus provided by the embodiments of the present disclosure can implement all method steps implemented by the foregoing method embodiments and achieve the same technical effects. Details of parts identical to the method embodiments and beneficial effects in this embodiment are not specifically repeated herein.

As shown in FIG. 11, an embodiment of the present disclosure further provides a network side device, comprising a memory 1120, a transceiver 1110, and a processor 1100:
the memory 1120 is configured to store a computer program; the transceiver 1110 is configured to transmit and receive data under control of the processor 1100; the processor 1100 is configured to read the computer program in the memory 1120 and perform the following operations:
determining identification information of N optimal beams in a first set and identification information of a predicted optimal beam;
monitoring the model according to a set of associated beams or a set of angle directions for the optimal N beams in the first set, and an identification or angle direction of the predicted optimal beam; where N is an integer greater than or equal to 1.

As an optional embodiment, the processor is further configured to read the computer program in the memory and perform the following operation:
if the predicted optimal beam is within the set of associated beams, or an angle direction of the predicted optimal beam is within the set of angle directions, determining that the model is available;
   or,
if the predicted optimal beam is not within the set of associated beams, or an angle direction of the predicted optimal beam is not within the set of angle directions, determining that the model is unavailable.

As an optional embodiment, the processor is further configured to read the computer program in the memory and perform the following operation:
if a predicted optimal beam is not within the set of associated beams for M3 consecutive times, or an angle direction of a predicted optimal beam is not within the set of angle directions for M4 consecutive times, determining that the model is unavailable; where M3 and M4 are integers greater than 1;
   or,
if a probability that a predicted optimal beam is not within the set of associated beams is greater than a first threshold, or a probability that an angle direction of a predicted optimal beam is not within the set of angle directions is greater than a second threshold, determining that the model is unavailable.

As an optional embodiment, the processor is further configured to read the computer program in the memory and perform the following operation:
obtaining identification information of N optimal beams in the first set and identification information of a predicted optimal beam reported by a terminal.

As an optional embodiment, the processor is further configured to read the computer program in the memory and perform the following operation:
receiving a measurement result, reported by a terminal, of reference signals transmitted by the terminal on beams in the first set;
determining identification information of optimal N beams in the first set and identification information of a predicted optimal beam according to the measurement result.

In FIG. 11, a bus architecture may include any number of interconnected buses and bridges, specifically linking various circuits including one or more processors represented by the processor 1100 and a memory represented by the memory 1120. The bus architecture may also link various other circuits such as peripheral devices, voltage regulators, and power management circuits, which are well-known in the art and thus will not be further described herein. A bus interface provides an interface. The transceiver 1110 may include multiple elements, namely a transmitter and a receiver, and provides a unit for communicating with various other devices over transmission media, including wireless channels, wired channels, optical cables, and other transmission media. The processor 1100 is responsible for managing the bus architecture and general processing, and the memory 1120 may store data used by the processor 1100 when performing operations.

The processor 1100 may be a CPU, ASIC, FPGA, or CPLD, and the processor may also adopt a multi-core architecture.

In the embodiments of the present disclosure, the network side device monitors the model through a set of associated beams or a set of angle directions for the optimal N beams in the first set; it enables monitoring of the model without the network side transmitting an entire beam set, thereby saving air interface resources, network energy consumption, and terminal energy consumption.

It should be noted that the foregoing network side device provided by the embodiments of the present disclosure can implement all method steps implemented by the foregoing method embodiments and achieve the same technical effects. Details of parts identical to the method embodiments and beneficial effects in this embodiment are not specifically repeated herein.

As shown in FIG. 12, embodiments of the present disclosure further provide a model monitoring apparatus. The apparatus includes:
A first determining unit 1201, configured to determine identifier information of N optimal beams in a first set and identifier information of a predicted optimal beam;
A second monitoring unit 1202, configured to monitor the model according to an associated beam set or an angle direction set of the optimal N beams in the first set, and an identifier or an angle direction of the predicted optimal beam; N is an integer greater than or equal to 1.

As an optional embodiment, the apparatus further includes:
A second determining unit, configured to determine that the model is available if the predicted optimal beam is within the associated beam set, or, if the angle direction of the predicted optimal beam is within the angle direction set;
   Or,
A third determining unit, configured to determine that the model is unavailable if the predicted optimal beam is not within the associated beam set, or, if the angle direction of the predicted optimal beam is not within the angle direction set.

As an optional embodiment, the third determining unit is specifically configured to:
Determine that the model is unavailable if the predicted optimal beam is not within the associated beam set for M3 consecutive times, or, if the angle direction of the predicted optimal beam is not within the angle direction set for M4 consecutive times; M3 and M4 are integers greater than 1;
   Or,
Determine that the model is unavailable if a probability that the predicted optimal beam is not within the associated beam set is greater than a first threshold, or, if a probability that the angle direction of the predicted optimal beam is not within the angle direction set is greater than a second threshold.

As an optional embodiment, the first determining unit is specifically configured to:
Obtain identifier information of N optimal beams in the first set and identifier information of the predicted optimal beam reported by a terminal.

As an optional embodiment, the first determining unit includes:
A receiving subunit, configured to receive a measurement result, reported by a terminal, of a reference signal sent on a beam in the first set measured by the terminal;
A determining subunit, configured to determine identifier information of the optimal N beams in the first set and identifier information of the predicted optimal beam according to the measurement result.

It should be noted here that the above apparatus provided by the embodiments of the present disclosure can implement all method steps implemented by the above method embodiments and can achieve the same technical effects. Parts identical to those in the method embodiments and beneficial effects are not specifically repeated here.

It should be noted that the division of units in the embodiments of the present disclosure is illustrative and is only a division of logical functions. There may be other division manners in actual implementation. In addition, functional units in various embodiments of the present disclosure may be integrated into one processing unit, or each unit may exist alone physically, or two or more units may be integrated into one unit. The above integrated units may be implemented in the form of hardware or in the form of software functional units.

If the integrated unit is implemented in the form of a software functional unit and sold or used as an independent product, it may be stored in a processor-readable storage medium. Based on such understanding, the technical solution of the present disclosure essentially, or the part contributing to the related art, or all or part of the technical solution may be embodied in the form of a software product. The computer software product is stored in a storage medium and includes several instructions for causing a computer device (which may be a personal computer, a server, a network device, etc.) or a processor to perform all or part of the steps of the methods described in the various embodiments of the present disclosure. The foregoing storage medium includes: various media that can store program codes, such as a U disk, a mobile hard disk, a Read-Only Memory (ROM), a Random Access Memory (RAM), a magnetic disk, or an optical disk.

Embodiments of the present disclosure further provide a processor-readable storage medium. The processor-readable storage medium stores a computer program. The computer program is configured to cause a processor to execute the various steps in the method embodiments described above. The processor-readable storage medium may be any available medium or data storage device that the processor can access, including but not limited to magnetic memory (such as a floppy disk, a hard disk, a magnetic tape, a Magneto-Optical Disk (MO), etc.), optical memory (such as a Compact Disk (CD), a Digital Versatile Disc (DVD), a Blu-ray Disc (BD), a High-Definition Versatile Disc (HVD), etc.), and semiconductor memory (such as a Read-Only Memory (ROM), an Erasable Programmable ROM (EPROM), an Electrically Erasable Programmable ROM (EEPROM), a non-volatile memory (NAND FLASH), a Solid State Disk or Solid State Drive (SSD)), etc.

Those skilled in the art should understand that embodiments of the present disclosure may be provided as a method, a system, or a computer program product. Therefore, the present disclosure may adopt the form of a complete hardware embodiment, a complete software embodiment, or an embodiment combining software and hardware. Moreover, the present disclosure may adopt the form of a computer program product implemented on one or more computer-usable storage media (including but not limited to disk storage and optical storage, etc.) containing computer-usable program code.

The present disclosure is described with reference to flowcharts and/or block diagrams of methods, apparatuses (systems), and computer program products according to embodiments of the present disclosure. It should be understood that each flow and/or block in the flowcharts and/or block diagrams, and combinations of flows and/or blocks in the flowcharts and/or block diagrams, may be implemented by processor-executable instructions. These processor-executable instructions may be provided to a processor of a general-purpose computer, a special-purpose computer, an embedded processor, or another programmable data processing device to produce a machine, such that the instructions executed by the processor of the computer or another programmable data processing device produce means for implementing the functions specified in one or more flows of the flowcharts and/or one or more blocks of the block diagrams.

These processor-executable instructions may also be stored in a processor-readable memory that can direct a computer or another programmable data processing device to operate in a specific manner, such that the instructions stored in the processor-readable memory produce an article of manufacture including instruction means. The instruction means implements the functions specified in one or more flows of the flowcharts and/or one or more blocks of the block diagrams.

These processor-executable instructions may also be loaded onto a computer or another programmable data processing device, such that a series of operational steps are executed on the computer or another programmable device to produce computer-implemented processing. Thus, the instructions executed on the computer or another programmable device provide steps for implementing the functions specified in one or more flows of the flowcharts and/or one or more blocks of the block diagrams.

It should be noted that it should be understood that the division of the above units is only a division of logical functions. In actual implementation, they may be fully or partially integrated into one physical entity, or may be physically separated. These units may all be implemented in the form of software called by processing elements; or may all be implemented in the form of hardware; or some units may be implemented in the form of software called by processing elements, and some units may be implemented in the form of hardware. For example, a determining unit may be a separately established processing element, or may be integrated into a chip of the above apparatus. Alternatively, it may be stored in a memory of the above apparatus in the form of program code, and a certain processing element of the above apparatus calls and executes the functions of the above determining unit. The implementation of other units is similar. In addition, these units may be integrated together or implemented independently. The processing element mentioned here may be an integrated circuit with signal processing capability. In the implementation process, each step of the above method or each unit may be completed by an integrated logic circuit of hardware in the processor element or by instructions in the form of software.

For example, each module, unit, subunit, or submodule may be one or more integrated circuits configured to implement the above method, such as: one or more Application Specific Integrated Circuits (ASICs), or one or more digital signal processors (DSPs), or one or more Field Programmable Gate Arrays (FPGAs), etc. For another example, when a unit is implemented by a processing element calling program code, the processing element may be a general-purpose processor, such as a Central Processing Unit (CPU) or another processor that can call program code. For yet another example, these units may be integrated together and implemented in the form of a system-on-a-chip (SOC).

The terms "first", "second", etc. in the specification and claims of the present disclosure are used to distinguish similar objects and are not necessarily used to describe a specific sequence or chronological order. It should be understood that the data so used may be interchanged under appropriate circumstances so that the embodiments of the present disclosure described herein can be implemented in sequences other than those illustrated or described herein. In addition, the terms "comprise" and "have" and any variations thereof are intended to cover non-exclusive inclusion. For example, a process, method, system, product, or device that comprises a series of steps or units is not necessarily limited to those steps or units that are clearly listed, but may include other steps or units that are not clearly listed or that are inherent to such processes, methods, products, or devices. Furthermore, the use of "and/or" in the specification and claims indicates at least one of the connected objects. For example, "A and/or B and/or C" indicates seven cases: A alone, B alone, C alone, both A and B, both B and C, both A and C, and all of A, B, and C. Similarly, the use of "at least one of A and B" in this specification and claims should be understood as "A alone, B alone, or both A and B exist".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A model monitoring method, comprising:
measuring, by a terminal, a reference signal transmitted by a network-side device on a beam in a first set;
monitoring a model according to an associated beam set or an angle direction set of optimal N beams in the first set; wherein N is an integer greater than or equal to 1.

2. The method according to claim 1, further comprising:
determining that the model is usable if a predicted optimal beam is within the associated beam set, or an angle direction of the predicted optimal beam is within the angle direction set;
or,
determining that the model is unusable if the predicted optimal beam is not within the associated beam set, or the angle direction of the predicted optimal beam is not within the angle direction set.

3. The method according to claim 2, wherein determining that the model is unusable if the predicted optimal beam is not within the associated beam set, or the angle direction of the predicted optimal beam is not within the angle direction set, comprises:
determining that the model is unusable if a predicted optimal beam is not within the associated beam set for consecutive M1 times, or an angle direction of a predicted optimal beam is not within the angle direction set for consecutive M2 times; wherein M1, M2 are integers greater than 1;
or,
determining that the model is unusable if a probability that the predicted optimal beam is not within the associated beam set is greater than a first threshold, or a probability that the angle direction of the predicted optimal beam is not within the angle direction set is greater than a second threshold.

4. The method according to claim 1, further comprising:
determining, by the terminal, the optimal N beams in the first set according to the reference signal measured on the beam in the first set; or, determining, by the terminal, the optimal N beams in the first set according to a reference signal measured on the beam in the first set at a prediction moment for predicting an optimal beam or at a second moment; wherein an absolute value of a difference between the second moment and the prediction moment is less than a first threshold;
determining, by the terminal, the associated beam set or the angle direction set of the optimal N beams according to first information transmitted by the network-side device.

5. The method according to claim 4, wherein the first information comprises any one of:
identification information of an associated beam of each beam in the first set;
angle direction information of each beam in the first set;
identification information of an associated beam of the N optimal beams in the first set; or,
angle direction information of the N optimal beams in the first set.

6. The method according to claim 5, wherein in a case that the first information comprises: the identification information of the associated beam of the N optimal beams in the first set; or, the angle direction information of the N optimal beams in the first set, the method further comprises:
transmitting, by the terminal, request information to the network-side device, the request information being used to request the network-side device to transmit the identification information or the angle direction information of the associated beam of the N optimal beams in the first set;
wherein the request information carries identification information of the N optimal beams in the first set.

7. The method according to claim 1, further comprising:
transmitting, by the terminal, identification information of one or more predicted optimal beams to the network-side device;
receiving, by the terminal, an associated beam set or an angle direction set of the predicted optimal beam transmitted by the network-side device.

8. A model monitoring method, comprising:
transmitting, by a network-side device, a reference signal on a beam in a first set;
transmitting, by the network-side device, a first information, the first information comprising any one of:
identification information of an associated beam of each beam in the first set;
angle direction information of each beam in the first set;
identification information of an associated beam of N optimal beams in the first set;
angle direction information of the N optimal beams in the first set.

9. The method according to claim 8, wherein in a case that the first information comprises: the identification information of the associated beam of the N optimal beams in the first set; or, the angle direction information of the N optimal beams in the first set, the method further comprises:
receiving, by the network-side device, request information transmitted by a terminal; the request information carrying identification information of the N optimal beams in the first set;
transmitting, by the network-side device, the identification information or the angle direction information of the associated beam of the N optimal beams in the first set to the terminal according to the request information.

10. The method according to claim 8, further comprising:
receiving identification information of one or more predicted optimal beams transmitted by a terminal;
transmitting an associated beam set or an angle direction set of the predicted optimal beam to the terminal.

11. A model monitoring method, comprising:
determining, by a network-side device, identification information of N optimal beams in a first set and identification information of a predicted optimal beam;
monitoring, by the network-side device, a model according to an associated beam set or an angle direction set of optimal N beams in the first set, and an identity or an angle direction of the predicted optimal beam; wherein N is an integer greater than or equal to 1.

12. The method according to claim 11, further comprising:
determining that the model is usable if the predicted optimal beam is within the associated beam set, or an angle direction of the predicted optimal beam is within the angle direction set;
or,
determining that the model is unusable if the predicted optimal beam is not within the associated beam set, or the angle direction of the predicted optimal beam is not within the angle direction set.

13. The method according to claim 12, wherein the determining that the model is unusable if the predicted optimal beam is not within the associated beam set, or the angle direction of the predicted optimal beam is not within the angle direction set, comprises:
determining that the model is unusable if a predicted optimal beam is not within the associated beam set for consecutive M3 times, or an angle direction of a predicted optimal beam is not within the angle direction set for consecutive M4 times; wherein M3, M4 are integers greater than 1;
or,
determining that the model is unusable if a probability that the predicted optimal beam is not within the associated beam set is greater than a first threshold, or a probability that the angle direction of the predicted optimal beam is not within the angle direction set is greater than a second threshold.

14. The method according to claim 11, wherein the determining, by the network-side device, the identification information of the N optimal beams in the first set and the identification information of the predicted optimal beam, comprises:
acquiring, by the network-side device, the identification information of the N optimal beams in the first set and the identification information of the predicted optimal beam reported by a terminal.

15. The method according to claim 11, wherein the determining, by the network-side device, the identification information of the N optimal beams in the first set and the identification information of the predicted optimal beam comprises:
receiving, by the network-side device, a measurement result, reported by a terminal, of a reference signal transmitted by the terminal on the beam in the first set; and
determining, by the network-side device, the identification information of the optimal N beams in the first set and the identification information of the predicted optimal beam according to the measurement result.

16. A terminal, comprising a memory, a transceiver, and a processor;
the memory is configured to store a computer program; the transceiver is configured to transmit and receive data under control of the processor; the processor is configured to read the computer program in the memory and perform the following operations:
measuring a reference signal transmitted by a network-side device on a beam in a first set;
monitoring a model according to an associated beam set or an angle direction set of optimal N beams in the first set; wherein N is an integer greater than or equal to 1.

17. The terminal according to claim 16, wherein the processor is further configured to read the computer program in the memory and perform the following operations:
determining that the model is usable if a predicted optimal beam is within the associated beam set, or an angle direction of the predicted optimal beam is within the angle direction set;
or,
determining that the model is unusable if the predicted optimal beam is not within the associated beam set, or the angle direction of the predicted optimal beam is not within the angle direction set.

18. The terminal according to claim 17, wherein the processor is further configured to read the computer program in the memory and perform the following operations:
determining that the model is unusable if a predicted optimal beam is not within the associated beam set for consecutive M1 times, or an angle direction of a predicted optimal beam is not within the angle direction set for consecutive M2 times; wherein M1, M2 are integers greater than 1;
or,
determining that the model is unusable if a probability that the predicted optimal beam is not within the associated beam set is greater than a first threshold, or a probability that the angle direction of the predicted optimal beam is not within the angle direction set is greater than a second threshold.

19. The terminal according to claim 16, wherein the processor is further configured to read the computer program in the memory and perform the following operations:
determining the optimal N beams in the first set according to the reference signal measured on the beam in the first set; or, determining the optimal N beams in the first set according to a reference signal measured on the beam in the first set at a prediction moment for predicting an optimal beam or at a second moment; wherein an absolute value of a difference between the second moment and the prediction moment is less than a first threshold;
determining the associated beam set or the angle direction set of the optimal N beams according to first information transmitted by the network-side device.

20. The terminal according to claim 19, wherein the first information comprises any one of:
identification information of an associated beam of each beam in the first set;
angle direction information of each beam in the first set;
identification information of an associated beam of the N optimal beams in the first set;
angle direction information of the N optimal beams in the first set.

21. The terminal according to claim 20, wherein in a case that the first information comprises: the identification information of the associated beam of the N optimal beams in the first set; or, the angle direction information of the N optimal beams in the first set, the processor is further configured to read the computer program in the memory and perform the following operations:
transmitting request information to the network-side device, the request information being used to request the network-side device to transmit the identification information or the angle direction information of the associated beam of the N optimal beams in the first set;
wherein the request information carries identification information of the N optimal beams in the first set.

22. The terminal according to claim 16, wherein the processor is further configured to read the computer program in the memory and perform the following operations:
transmitting identification information of one or more predicted optimal beams to the network-side device;
receiving an associated beam set or an angle direction set of the predicted optimal beam transmitted by the network-side device.

23. A model monitoring apparatus, comprising:
a first measurement unit, configured to measure a reference signal sent by a network side device on beams in a first set;
a first monitoring unit, configured to monitor a model according to an associated beam set or an angle direction set of N best beams in the first set; wherein N is an integer greater than or equal to 1.

24. The apparatus according to claim 23, further comprising:
a first determining unit, configured to determine that the model is usable if a predicted best beam is within the associated beam set, or an angle direction of the predicted best beam is within the angle direction set;
or,
a second determining unit, configured to determine that the model is unusable if the predicted best beam is not within the associated beam set, or the angle direction of the predicted best beam is not within the angle direction set,.

25. The apparatus according to claim 24, wherein the second determining unit is specifically configured to:
if a predicted best beam is not within the associated beam set for M1 consecutive times, or an angle direction of a predicted best beam is not within the angle direction set for M2 consecutive times, determine that the model is unusable; wherein M1 and M2 are integers greater than 1;
or,
if a probability that the predicted best beam is not within the associated beam set is greater than a first threshold, or a probability that the angle direction of the predicted best beam is not within the angle direction set is greater than a second threshold, determine that the model is unusable.

26. The apparatus according to claim 23, further comprising:
a third determining unit, configured to determine the N best beams in the first set according to the reference signal measured on the beams in the first set; or, determine the N best beams in the first set according to a reference signal measured on the beams in the first set at a prediction time of a predicted best beam or at a second time; wherein an absolute value of a difference between the second time and the prediction time is less than a first threshold;
a fourth determining unit, configured to determine the associated beam set or the angle direction set of the N best beams according to first information sent by the network side device.

27. The apparatus according to claim 26, wherein the first information comprises any one of the following:
identification information of an associated beam of each beam in the first set;
angle direction information of each beam in the first set;
identification information of an associated beam of the N best beams in the first set;
angle direction information of the N best beams in the first set.

28. The apparatus according to claim 27, further comprising:
a first transmitting unit, configured to transmit request information to the network side device in a case that the first information comprises: the identification information of the associated beam of the N best beams in the first set; or, the angle direction information of the N best beams in the first set, the request information being used to request the network side device to transmit the identification information or the angle direction information of the associated beam of the N best beams in the first set;
wherein the request information carries identification information of the N best beams in the first set.

29. The apparatus according to claim 23, further comprising:
a second transmitting unit, configured to transmit identification information of one or more predicted best beams to the network side device;
a receiving unit, configured to receive an associated beam set or an angle direction set of the predicted best beam sent by the network side device.

30. A network side device, comprising a memory, a transceiver, and a processor;
the memory is configured to store a computer program;
the transceiver is configured to transmit and receive data under control of the processor;
the processor is configured to read the computer program in the memory and perform the following operations:
transmitting a reference signal on beams in a first set;
transmitting first information, the first information comprising any one of the following:
identification information of an associated beam of each beam in the first set;
angle direction information of each beam in the first set;
identification information of an associated beam of N best beams in the first set;
angle direction information of the N best beams in the first set.

31. The network side device according to claim 30, wherein, in a case that the first information comprises: the identification information of the associated beam of the N best beams in the first set; or, the angle direction information of the N best beams in the first set; the processor is further configured to read the computer program in the memory and perform the following operations:
receiving request information sent by a terminal; wherein the request information carries identification information of the N best beams in the first set;
transmitting the identification information or the angle direction information of the associated beam of the N best beams in the first set to the terminal according to the request information.

32. The network side device according to claim 30, wherein the processor is further configured to read the computer program in the memory and perform the following operations:
receiving identification information of one or more predicted best beams sent by a terminal;
transmitting an associated beam set or an angle direction set of the predicted best beam to the terminal.

33. A model monitoring apparatus, comprising:
a first transmitting unit, configured to transmit a reference signal on beams in a first set;
a second transmitting unit, configured to transmit first information, the first information comprising any one of the following:
identification information of an associated beam of each beam in the first set;
angle direction information of each beam in the first set;
identification information of an associated beam of N best beams in the first set;
angle direction information of the N best beams in the first set.

34. The apparatus according to claim 33, further comprising:
a first receiving unit, configured to receive request information sent by a terminal in a case that the first information comprises: the identification information of the associated beam of the N best beams in the first set; or, the angle direction information of the N best beams in the first set; wherein the request information carries identification information of the N best beams in the first set;
a third transmitting unit, configured to transmit the identification information or the angle direction information of the associated beam of the N best beams in the first set to the terminal according to the request information.

35. The apparatus according to claim 33, further comprising:
a second receiving unit, configured to receive identification information of one or more predicted best beams sent by a terminal;
a fourth transmitting unit, configured to transmit an associated beam set or an angle direction set of the predicted best beam to the terminal.

36. A network side device, comprising a memory, a transceiver, and a processor:
the memory is configured to store a computer program;
the transceiver is configured to transmit and receive data under control of the processor;
the processor is configured to read the computer program in the memory and perform the following operations:
determining identification information of N best beams in a first set and identification information of a predicted best beam;
monitoring a model according to an associated beam set or an angle direction set of the N best beams in the first set, and the identification or the angle direction of the predicted best beam; wherein N is an integer greater than or equal to 1.

37. The network side device according to claim 36, wherein the processor is further configured to read the computer program in the memory and perform the following operations:
if the predicted best beam is within the associated beam set, or an angle direction of the predicted best beam is within the angle direction set, determining that the model is usable;
or,
if the predicted best beam is not within the associated beam set, or the angle direction of the predicted best beam is not within the angle direction set, determining that the model is unusable.

38. The network side device according to claim 37, wherein the processor is further configured to read the computer program in the memory and perform the following operations:
if a predicted best beam is not within the associated beam set for M3 consecutive times, or an angle direction of a predicted best beam is not within the angle direction set for M4 consecutive times, determining that the model is unusable; wherein M3 and M4 are integers greater than 1;
or,
if a probability that the predicted best beam is not within the associated beam set is greater than a first threshold, or a probability that the angle direction of the predicted best beam is not within the angle direction set is greater than a second threshold, determining that the model is unusable.

39. The network side device according to claim 36, wherein the processor is further configured to read the computer program in the memory and perform the following operations:
obtaining identification information of N best beams in the first set and identification information of the predicted best beam reported by a terminal.

40. The network side device according to claim 36, wherein the processor is further configured to read the computer program in the memory and perform the following operations:
receiving a measurement result reported by a terminal, the measurement result being a measurement performed by the terminal on a reference signal sent on the beams in the first set;
determining the identification information of the N best beams in the first set and the identification information of the predicted best beam according to the measurement result.

41. A model monitoring apparatus, comprising:
a first determining unit, configured to determine identification information of N best beams in a first set and identification information of a predicted best beam;
a second monitoring unit, configured to monitor the model according to an associated beam set or an angle direction set of the N best beams in the first set, and the identification or the angle direction of the predicted best beam; wherein N is an integer greater than or equal to 1.

42. The apparatus according to claim 41, further comprising:
a second determining unit, configured to determine that the model is usable if the predicted best beam is within the associated beam set, or an angle direction of the predicted best beam is within the angle direction set;
or,
a third determining unit, configured to determine that the model is unusable if the predicted best beam is not within the associated beam set, or the angle direction of the predicted best beam is not within the angle direction set.

43. The apparatus according to claim 42, wherein the third determining unit is specifically configured to:
if a predicted best beam is not within the associated beam set for M3 consecutive times, or an angle direction of a predicted best beam is not within the angle direction set for M4 consecutive times, determine that the model is unusable; wherein M3 and M4 are integers greater than 1;
or,
if a probability that the predicted best beam is not within the associated beam set is greater than a first threshold, or a probability that the angle direction of the predicted best beam is not within the angle direction set is greater than a second threshold, determine that the model is unusable.

44. The apparatus according to claim 41, wherein the first determining unit is specifically configured to:
obtain identification information of N best beams in the first set and identification information of the predicted best beam reported by a terminal.

45. The apparatus according to claim 41, wherein the first determining unit comprises:
a receiving subunit, configured to receive a measurement result reported by a terminal, the measurement result being a measurement performed by the terminal on a reference signal sent on the beams in the first set;
a determining subunit, configured to determine the identification information of the N best beams in the first set and the identification information of the predicted best beam according to the measurement result.

46. A processor-readable storage medium, storing a computer program, wherein the computer program is configured to cause the processor to execute the method according to any one of claims 1 to 7, or the computer program is configured to cause the processor to execute the method according to any one of claims 8 to 10, or the computer program is configured to cause the processor to execute the method according to any one of claims 11 to 15.
